# EUROPÄISCHE PATENTSCHRIFT

(11) **EP 2 397 374 B1**
(45) Veröffentlichungstag und Bekanntmachung des Hinweises auf die Patenterteilung: **05.12.2012**
(21) Anmeldenummer: 10305649.5
(22) Anmeldetag: 17.06.2010
(51) Int. Cl.: B60R 16/02, F16G 13/16, H02G 11/00

(54) **Vorrichtung zum Verbinden von Funktionselementen mit einer Versorgungsquelle**
Device for connecting function elements with a supply source
Dispositif de liaison d'éléments fonctionnels à une source d'alimentation

(43) Veröffentlichungstag der Anmeldung: 21.12.2011
(73) Patentinhaber: Nexans, 75008 Paris (FR)
(72) Erfinder: Lindner, Gerhard, 95703, Plößberg (DE)
(74) Vertreter: Döring, Roger

(56) Entgegenhaltungen:
- EP-A1- 1 894 789
- DE-U1-202005 019 103
- JP-A- 2003 111 236
- JP-A- 2007 159 369

## Beschreibung

Die Erfindung bezieht sich auf eine Vorrichtung gemäß dem Oberbegriff des Patentanspruchs 1.

Eine solche Vorrichtung geht aus der DE 20 2005 019103 U1 hervor.

In den Türen von modernen Kraftfahrzeugen, wie Personenkraftwagen und Lastkraftwagen - im folgenden kurz "Fahrzeug" genannt -, sind unterschiedliche Funktionselemente angeordnet, die mit Energie bzw. Signalen versorgt werden müssen. Solche Funktionselemente sind beispielsweise elektrische Motoren für Fensterheber, Elemente einer Zentralverriegelung, ein Gassack (Airbag) und Lautsprecher. Das gilt generell für alle Türen eines Fahrzeugs, insbesondere auch für Schiebetüren, die zum Öffnen nicht in Scharnieren gedreht, sondern zunächst seitlich aus einer Seitenwand der Karosserie des Fahrzeugs herausgezogen und dann mittels sogenannter Fahrwagen parallel zu dieser Seitenwand verschoben werden, bis eine entsprechende Türöffnung in der Seitenwand zum Ein- und Aussteigen von Personen freigegeben ist. Zum Schließen der Schiebetür erfolgen die angegebenen Bewegungen in der Gegenrichtung.

Versorgungsquellen - im folgenden kurz "Quellen" genannt - im Sinne der Erfindung sind beispielsweise eine elektrische Stromquelle, ein Radioapparat, ein Tonwiedergabegerät und eine Signalquelle für elektrische oder optische Signale, aber auch Quellen zur hydraulischen und pneumatischen Versorgung. An diese Quellen werden geeignete Leitungen angeschlossen, die zu den Funktionselementen in einer Schiebetür des entsprechenden Fahrzeugs führen. "Leitungen" können demnach elektrische und optische Leitungen sowie Schläuche sein. Im Fahrzeug ist eine mit der Quelle verbundene Anschlußstelle vorhanden, an welche die Leitungen beispielsweise durch Aufstecken angeschlossen werden können.

Für das Herausziehen, Verschieben und Verschließen einer Schiebetür gibt es bei den Fahrzeugen von unterschiedlichen Herstellern unterschiedliche Mechanismen. Bei allen Ausführungsarten müssen die für die Versorgung der Funktionselemente benötigten Leitungen einem verhältnismäßig langen Verfahrweg der Schiebetür folgen können, ohne daß die Gefahr einer Beschädigung derselben besteht. Die Leitungen müssen außerdem so angeordnet sein, daß sie das Ein- und Aussteigen in ein Fahrzeug bzw. aus demselben nicht behindern.

Aus der eingangs erwähnten DE 20 2005 019 103 U 1 geht eine Vorrichtung zum Verbinden von Funktionselementen, die in einer Schiebetür eines Kraftfahrzeugs angeordnet sind, mit mindestens einer in der Karosserie des Kraftfahrzeugs vorhandenen Versorgungsquelle mittels Leitungen hervor, die zwischen den Funktionselementen und der Versorgungsquelle verlaufen und in einer Führungskette angeordnet sind, welche aus beweglich miteinander verbundenen, mechanisch stabilen Kettengliedern besteht. Die Führungskette ist mit einem ersten Ende an der Schiebetür und mit einem zweiten Ende im Bereich einer Anschlußstelle der Versorgungsquelle an der Karosserie des Kraftfahrzeugs befestigt. Die als Schleppkette bezeichnete Führungskette besteht aus einer oberen Schleppkette und einer unteren Schleppkette, die durch ein Schwenklager miteinander verbunden sind. Die obere Schleppkette ist in einem in der Schiebetür vorhandenen Führungskanal untergebracht.

Der Erfindung liegt die Aufgabe zugrunde, die eingangs geschilderte Vorrichtung so zu gestalten, daß sie bei einfachem Aufbau einerseits einen wirksamen Schutz der Leitungen sicherstellt und andererseits den freien Zugang zum Fahrzeug nicht behindert.

Diese Aufgabe wird entsprechend dem kennzeichnenden Merkmal des Patentanspruchs 1 gelöst.

Die Anschlußstelle der Quelle zum Anschließen der Leitungen kann bei dieser Vorrichtung weit unten und damit gut gegen mechanische Beanspruchungen geschützt im Fahrzeug angebracht werden. Die unterschiedlichen Leitungen sind in der Führungskette mechanisch geschützt untergebracht und mit derselben so weit wie möglich im unteren Bereich des Fahrzeugs angeordnet, so daß der freie Zugang zu demselben und das Aussteigen aus demselben nicht durch die Türschwelle erhöhende Einbauten behindert werden. Das ist einerseits dadurch realisiert, daß die Führungskette wegen des in derselben angebrachten Krümmers an ihrem zweiten, im Bereich der Anschlußstelle montierten Ende oberhalb des Fahrwagens der Schiebetür liegt, der dadurch ohne Behinderung und ohne die Gefahr einer Beschädigung der Führungskette bzw. der in derselben angeordneten Leitungen bei geöffneter Schiebetür bis an den entsprechenden Rand der Türöffnung gebracht werden kann. Die Türöffnung steht damit bei vollständig geöffneter Schiebetür in voller Breite zum Einsteigen in das Fahrzeug und zum Aussteigen aus demselben zur Verfügung. Der Krümmer erlaubt andererseits bei geschlossener Schiebetür eine Position der Führungskette in einem in der Karosserie des Fahrzeugs weit unten liegenden Bereich. Es wird daher für die Führungskette im Aufbau der Karosserie nur wenig Platz benötigt, so daß die Schwelle der Türöffnung - wie bereits erwähnt - in der Seitenwand des Fahrzeugs so weit wie möglich unten in der Karosserie verlaufen kann. Die lichte Höhe der Öffnung zum Besteigen des Fahrzeugs und zum Aussteigen aus demselben kann daher so groß wie möglich dimensioniert werden.

Ein Ausführungsbeispiel des Erfindungsgegenstandes ist in den Zeichnungen dargestellt.

Es zeigen:
Fig. 1 eine Seitenansicht eines Fahrzeugs.
Fig. 2 und 3 schematisch Ausschnitte einer Türöffnung des Fahrzeugs nach Fig. 1 in vergrößerter Darstellung.
Fig. 4 eine Seitenansicht einer Schiebetür des Fahrzeugs nach Fig. 1.
Fig. 5 eine in der Anordnung nach der Erfindung verwendbare Führungskette in weiter vergrößerter Darstellung.

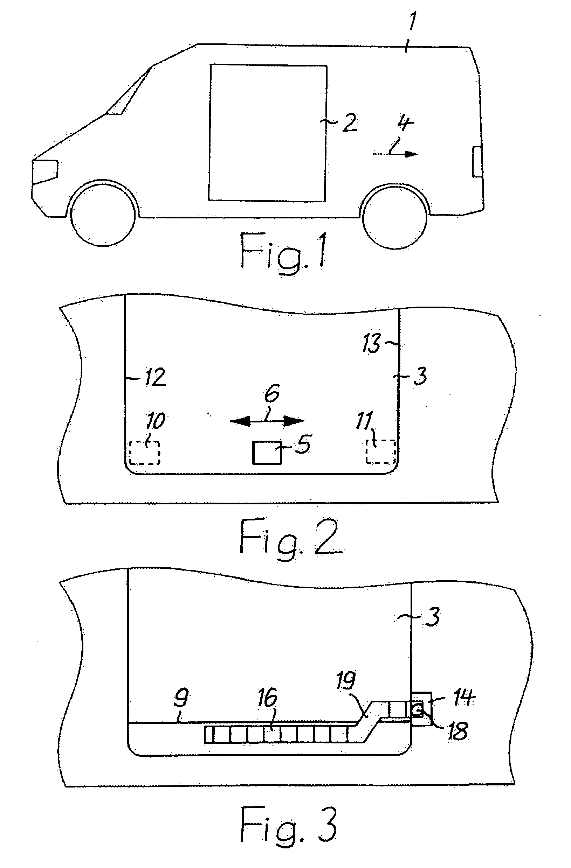

In Fig. 1 ist als Fahrzeug 1 beispielsweise ein Transporter in einer Seitenansicht dargestellt. Das Fahrzeug 1 hat eine Schiebetür 2, durch welche eine Türöffnung 3 (Fig. 2 und 3) in der Seitenwand desselben verschlossen ist. Zum Öffnen der Schiebtür 2 muß dieselbe zunächst ein kurzes Stück aus der Seitenwand des Fahrzeugs 1 herausgezogen werden. Sie kann dann in Richtung des Pfeils 4 parallel zur Seitenwand des Fahrzeugs 1 soweit verschoben werden, bis die Türöffnung 3 freigegeben ist.

Zum Bewegen der Schiebetür 2 und insbesondere zu ihrer seitlichen Verschiebung ist dieselbe unten an einem sogenannten Fahrwagen 5 befestigt, der in der Karosserie des Fahrzeugs 1 geführt in Richtung des Doppelpfeils 6 hin- und her bewegbar ist. Die Schiebetür 2 hat zumindest in ihrem oberen Bereich eine weitere Halterung 7, die ebenfalls beweglich in der Karosserie des Fahrzeugs 1 geführt ist. Der Fahrwagen 5 greift beispielsweise mit einem Vorsprung 8 in eine in der Karosserie des Fahrzeugs 1 angebrachte Führungsnut 9 (Fig. 3) ein, durch welchen er auch in derselben gehalten ist.

Der Fahrwagen 5 ist innerhalb der Türöffnung 3 zwischen zwei Endstellungen 10 und 11 verschiebbar, die in Fig. 2 gestrichelt eingezeichnet sind. Die Endstellungen 10 und 11 werden durch die seitlichen Begrenzungen 12 und 13 der Türöffnung 3 bestimmt. Wenn der Fahrwagen 5 sich in der Endstellung 10 befindet, ist die Schiebetür 2 geschlossen. In der Endstellung 11 ist sie geöffnet.

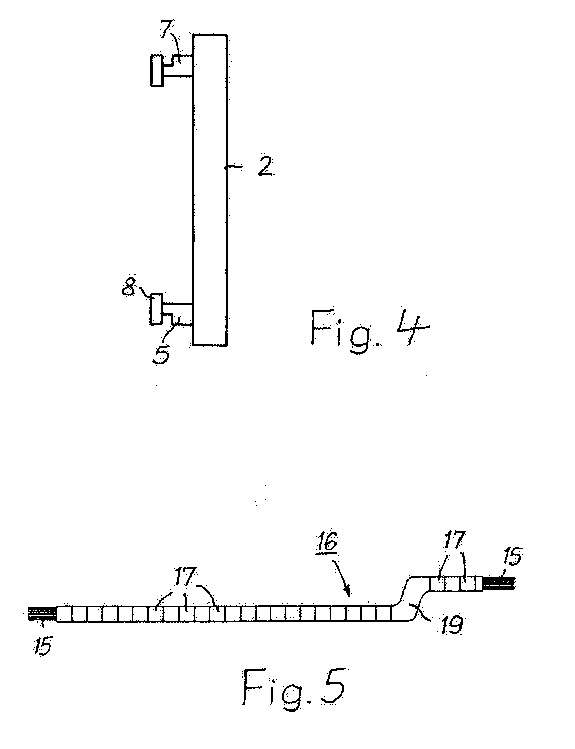

Im Bereich der Begrenzung 13 ist eine durch ein Kästchen angedeutete Anschlußstelle 14 zum Anschließen von Leitungen 15 (Fig. 5) vorgesehen, welche in Montageposition in der Seitentür 2 befindliche Funktionselemente mit zumindest einer Versorgungsquelle (Quelle) verbinden, die im Fahrzeug 1 vorhanden ist. Die Leitungen 15 können an ihren Enden mit Steckverbindern ausgerüstet sein, so daß sie sowohl mit der Anschlußstelle 14 als auch mit den Funktionselementen der Schiebetür 2 durch Aufstecken zu verbinden sind.

Die Leitungen 15 sind nach ihrer Montage ortsfest mit der Anschlußstelle 14 und der Schiebetür 2 verbunden. Zwischen diesen beiden Punkten müssen sie beweglich angeordnet sein, damit sie den Bewegungen der Schiebetür 2 folgen können. Für diese Bewegung und auch zu ihrem Schutz gegen mechanische Beschädigungen sind die Leitungen 15 in einer Führungskette 16 untergebracht, die aus einer Vielzahl von beweglich miteinander verbundenen, mechanisch stabilen Kettengliedern 17 besteht. Die Führungskette 16 ist an einem Ende mit der Schiebetür 2 und mit ihrem anderen Ende im Bereich der Anschlußstelle 14 an einer durch einen Kreis angedeuteten Drehstelle 18 jeweils schwenkbar verbunden.

Bei geschlossener Schiebetür 2 liegt die Führungskette 16 gemäß Fig. 3 mit einer wesentlichen Länge unterhalb der Führungsnut 9 im Bodenbereich der Türöffnung 3 und mit einem relativ kurzen Bereich, der an die Drehstelle 18 angeschlossen ist, oberhalb der Führungsnut 9. Diese bezüglich des Bodens des Fahrzeugs 1 unterschiedlichen Höhen der Führungskette 16 sind durch einen im Verlauf derselben angebrachten Krümmer 19 realisiert, der entsprechend der zeichnerischen Darstellung in Fig. 5 etwa S-förmig verläuft.

Durch die Anhebung der Führungskette 16 und damit der Leitungen 15 im Bereich der Anschlußstelle 14 auf ein erhöhtes, oberhalb der Führungsnut 9 liegendes Niveau ist sichergestellt, daß der Fahrwagen 5 bei voll geöffneter Schiebetür 2 seine Endstellung 11 einnehmen kann, ohne bei seiner Bewegung durch die Führungskette 16 behindert zu werden, die als Vorgabe so weit wie möglich im unteren Bereich des Fahrzeugs 1 angeordnet sein soll. Auch eine Beschädigung der Führungskette 16 und der von ihr umschlossenen Leitungen 15 durch den Fahrwagen 5 ist durch den Einsatz des Krümmers 19 ausgeschlossen.

## Patentansprüche

1. Vorrichtung zum Verbinden von Funktionselementen, die in einer Schiebetür (2) eines Kraftfahrzeugs (1) angeordnet sind, welche in Schließstellung eine Türöffnung verschließt, mit mindestens einer in der Karosserie des Kraftfahrzeugs vorhandenen Versorgungsquelle mittels Leitungen (15), die zwischen den Funktionselementen und der Versorgungsquelle verlaufen und in einer Führungskette (16) angeordnet sind, welche aus beweglich miteinander verbundenen, mechanisch stabilen Kettengliedern (17) besteht, bei welcher die Schiebetür (2) an einem Fahrwagen (5) angebracht ist, der im Bodenbereich der Karosserie des Kraftfahrzeugs im wesentlichen über die ganze Breite der Türöffnung hin- und her bewegbar ist, bei welcher im Bereich der Türöffnung im Kraftfahrzeug eine Anschlußstelle (14) der Versorgungsquelte zum Anschließen der Leitungen (15) vorhanden ist, **dadurch gekennzeichnet, daß** die Führungskette (16) mit einem ersten Ende an der Schiebetür (2) und mit einem zweiten Ende im Bereich der Anschlußstelle (14) an der Karosserie des Kraftfahrzeugs (1) befestigt ist, und daß im Verlauf der Führungskette (16) im Bereich der in der Karosserie des Kraftfahrzeugs vorhandenen Anschlußstelle (14), an welcher die Führungskette (16) schwenkbar befestigt ist, ein Krümmer (19) angebracht ist, durch welchen dieselbe mit ihrem zweiten Ende auf ein Niveau angehoben ist, das oberhalb der Oberkante des Fahrwagens (5) liegt, während sie auf der anderen Seite des Krümmers (19) bei in Schließstellung befindlicher Schiebetür (2) unterhalb der Unterkante des Fahrwagens (5) angeordnet ist.

2. Vorrichtung nach Anspruch 1, **dadurch gekennzeichnet, daß** in der Führungskette (16) elektrische und/oder optische Leitungen sowie Schläuche angebracht sind.

## Claims

1. Device for connecting functional elements which are arranged in a sliding door (2) of a motor car (1), which inclosed position closes a door opening, having at least one supply source provided in the body of the motorcar, through lines (15) which extend between the functional elements and the supply source and whic h are arranged within a guiding chaine (16), which consists of mechanically stable chain links (17) which are moveablyconnected to each other, in which the sliding door (2) is mounted on a carriage (5) which is moveable backand forth in the bottom are a ofthe motorc are essentially over the entire width of a door opening, wherein in the area of the dooropening a connecting point (14) is provided within the motor car for the connection of the lines(15),**characterized in that** the guide chain (16) is pivotally fastened with a first end to the sliding door (2) and with a second end in the area of the connection point (14) to the body of the motorcar (1), and that an elbow (19) is arranged along the length of the guide chain (16) in the vicinity of the connection point (14) to which the guide chain is pivotally connected, by which the guide chain (16) is raised with its second end to a level located above the upperedge ofthe carriage (5), while on the otherside of the elbow (19) with the sliding door(2) being in the closed position the guide chain is arranged below the bottom edge ofthe carriage (5).

2. Device according to claim 1, **characterized in that** the guide chain (16) comprises electrical and/or optical lines as well as tubes.

## Revendications

1. Dispositif de liaison d'éléments fonctionnels, qui sont disposés dans une porte coulissante (2) d'un véhicule automobile (1), laquelle ferme une ouverture de porte dans la position de fermeture, à au moins une source d'alimentation prévue dans la carrosserie du véhicule automobile au moyen de câbles (15) qui s'étendent entre les éléments fonctionnels et la source d'alimentation et qui sont disposés dans une chaîne de guidage (16) qui est constituée de maillons de chaîne (17) mécaniquement stables reliés les uns aux autres de manière mobile, la porte coulissante (2) étant montée sur un chariot (5) qui peut être animé d'un mouvement de va-et-vient essentiellement sur toute la largeur de l'ouverture de porte dans la région de fond de la carrosserie du véhicule automobile, un point de raccordement (14) de la source d'alimentation pour raccorder les câbles (15) étant prévu dans la région de l'ouverture de porte dans le véhicule automobile, **caractérisé en ce que** la chaîne de guidage (16) est fixée à la carrosserie du véhicule automobile (1) par l'intermédiaire d'une première extrémité au niveau de la porte coulissante (2) et par l'intermédiaire d'une deuxième extrémité dans la région du point de raccordement (14) et **en ce qu'**un coude (19) est ménagé dans le tracé de la chaîne de guidage (16) dans la région du point de raccordement (14), prévu dans la carrosserie du véhicule automobile, au niveau duquel la chaîne de guidage (16) est fixée de manière pivotante, grâce auquel coude la deuxième extrémité de la chaîne de guidage est élevée à un niveau qui est situé au-dessus du bord supérieur du chabot (5), tandis que la chaîne de guidage, de l'autre côté du coude (19), est disposée en dessous du bord inférieur du chariot (5) lorsque la porte coulissante (2) se trouve dans la position de fermeture.

2. Dispositif selon la revendication 1, **caractérisé en ce que** des câbles électriques et/ou optiques ainsi que des tuyaux sont installés dans la chaîne de guidage (16).
